# EUROPÄISCHE PATENTANMELDUNG

(11) **EP 4 759 422 A1**
(43) Veröffentlichungstag der Anmeldung: **17.06.2026**
(21) Anmeldenummer: 24218719.3
(22) Anmeldetag: 10.12.2024
(51) Int. Cl.: B02C 23/02, B02C 21/02

(54) **ZUFÜHRTRICHTER**

(71) Anmelder: HAZEMAG & EPR GmbH, 48249 Dülmen (DE)
(72) Erfinder: BORGERS, Felix, 45721 Haltern am See (DE); LEWE, Florian, 48249 Dülmen (DE)
(74) Vertreter: Zenz Patentanwälte Partnerschaft mbB

(57) **Zusammenfassung**

Die Erfindung betrifft einen Zuführtrichter (1) für eine Materialverarbeitungsmaschine mit Trichterwänden (2), welche in eine Arbeitsposition und eine Transportposition bewegbar gelagert sind, wobei jeder der Trichterwände (2) wenigstens eine Trichterwand-Stellvorrichtung (3) zugeordnet ist, wobei die wenigstens eine Trichterwand-Stellvorrichtung (3) wenigstens ein Gestell (4), eine an dem wenigstens einen Gestell (4) bewegbar gelagerte Antriebsvorrichtung (6) und ein zum Bewegen der zugeordneten Trichterwand (2) ausgebildetes Hebelsystem (7), welches in eine Selbsthemmungsstellung und eine Faltstellung an dem wenigstens einen Gestell (4) bewegbar gelagert ist, aufweist wobei die Antriebsvorrichtung (6) mit dem Hebelsystem (7) bewegungsgekoppelt verbunden ist und die Antriebsvorrichtung (6) das Hebelsystem (7) in die Selbsthemmungsstellung und/oder in die Faltstellung bewegend ausgebildet ist, und wobei in der Arbeitsposition der Trichterwand (2) das Hebelsystem (7) in der Selbsthemmungsstellung angeordnet ist und das Hebelsystem (7) die Trichterwand (2) in der Arbeitsposition selbsthemmend haltend ausgebildet ist.

## Beschreibung

Die Erfindung betrifft einen Zuführtrichter für eine Materialverarbeitungsmaschine mit mehreren Trichterwänden, welche jeweils in eine Arbeitsposition, in welcher die Trichterwände eine Aufnahme und Zuführung von zu verarbeitendem Material ermöglichend angeordnet sind, und eine Transportposition, in welcher die Trichterwände zum Transport kompakt weggeklappt an der Materialverarbeitungsmaschine angeordnet sind, bewegbar gelagert sind.

Bekannte Materialverarbeitungsmaschinen werden üblicherweise zum Zuführen, Fördern, Zerkleinern, Sieben oder Waschen von Material, wie zum Beispiel von mineralischen Rohstoffen, verwendet. Diese bekannten Materialverarbeitungsmaschinen weisen beispielsweise einen Zuführtrichter, ein Förderband, einen Brecher, ein Sieb oder eine entsprechende Vorrichtung zum Überführen, Verfeinern oder Sortieren von Mineralstoffen auf. Derartige Materialverarbeitungsmaschinen können als mobile Maschinen ausgebildet sein, so dass sie zwischen verschiedenen Arbeitsplätzen oder zumindest innerhalb eines Arbeitsplatzes bewegt werden können. Zur Reduzierung der Höhe der Materialverarbeitungsmaschinen ist es daher bekannt, dass die Trichterwänden zwischen einer Arbeitsposition, in welcher die Trichterwände eine Aufnahme und Zuführung von zu verarbeitendem Material ermöglichend angeordnet sind, und einer Transportposition, in welcher die Trichterwände zum Transport kompakt weggeklappt an der Materialverarbeitungsmaschine angeordnet sind, bewegbar gelagert sind. Die bewegbare Lagerung der Trichterwände und insbesondere die Anordnung in der Arbeitsposition stellt dabei nach wie vor aufgrund der starken Beanspruchung der Trichterwände ein großes Problem dar. Denn zusätzlich zu dem hohen Gewicht des zugeführten Materials, welches auf die Trichterwände bei Beschickung des Zuführtrichters auftrifft, kann auch die Schaufel eines zum Beschicken eingesetzten Baggers versehentlich auf die Trichterwände auftreffen, so dass die Trichterwände in der Arbeitsposition großen Kräften standhalten müssen. Diese Anforderungen stehen im Widerspruch zu der Forderung, dass die Trichterwände für den Transport der Materialverarbeitungsmaschine beweglich sein müssen. Denn die Beweglichkeit setzt eine entsprechende Lagerung der Trichterwände voraus, was im Widerspruch zu einer stabilen Anordnung der Trichterwände in der Arbeitsposition steht.

Der Erfindung liegt die Aufgabe zugrunde, eine Lösung zu schaffen, die auf konstruktiv einfache Weise und kostengünstig einen Zuführtrichter bereitstellt, welcher die vorstehend genannten Nachteile vermeidet und die vorstehend genannten Probleme löst und welcher eine sichere und stabile Anordnung der Trichterwände in der Arbeitsposition gewährleistet.

Diese Aufgabe wird erfindungsgemäß gelöst durch einen Zuführtrichter für eine Materialverarbeitungsmaschine mit den Merkmalen gemäß dem Anspruch 1.

Der erfindungsgemäße Zuführtrichter für eine Materialverarbeitungsmaschine weist mehrere Trichterwände auf, welche jeweils in eine Arbeitsposition, in welcher die Trichterwände eine Aufnahme und Zuführung von zu verarbeitendem Material ermöglichend angeordnet sind, und eine Transportposition, in welcher die Trichterwände zum Transport kompakt weggeklappt an der Materialverarbeitungsmaschine angeordnet sind, bewegbar gelagert sind. Jeder der Trichterwände ist wenigstens eine Trichterwand-Stellvorrichtung zugeordnet, wobei die wenigstens eine Trichterwand-Stellvorrichtung wenigstens ein Gestell, eine an dem wenigstens einen Gestell bewegbar gelagerte Antriebsvorrichtung, und ein zum Bewegen der zugeordneten Trichterwand ausgebildetes Hebelsystem, welches in eine Selbsthemmungsstellung und eine Faltstellung an dem wenigstens einen Gestell bewegbar gelagert ist, aufweist. Ferner ist die Antriebsvorrichtung mit dem Hebelsystem bewegungsgekoppelt verbunden bzw. antriebsverbunden, wobei die Antriebsvorrichtung das Hebelsystem in die Selbsthemmungsstellung und/oder in die Faltstellung bewegend ausgebildet ist. In der Arbeitsposition der Trichterwand ist das Hebelsystem in der Selbsthemmungsstellung angeordnet, wobei das Hebelsystem die Trichterwand in der Arbeitsposition selbsthemmend haltend ausgebildet ist. Im Sinne der Erfindung ist unter dem Begriff "selbsthemmend" zu verstehen, dass das Hebelsystem in der Selbsthemmungsstellung blockiert ist und seine Stellung hält, selbst wenn eine Last am Hebelsystem anliegt. Das Gestell kann an der Materialverarbeitungsmaschine befestigbar ausgebildet sein oder als Teil der Materialverarbeitungsmaschine oder des Chassis der Materialverarbeitungsmaschine ausgebildet sein.

Vorteilhafte und zweckmäßige Ausgestaltungen und Weiterbildungen der Erfindung ergeben sich aus den entsprechenden Unteransprüchen.

Durch die Erfindung wird ein Zuführtrichter für eine Materialverarbeitungsmaschine bereitgestellt, welcher sich durch eine kompakte Konstruktion auszeichnet und mit welchem die aus dem Stand der Technik bekannten Nachteile und Probleme vermieden sowie gelöst werden. Dadurch, dass das Hebelsystem der Trichterwand-Stellvorrichtung in der Arbeitsposition der Trichterwände eine Selbsthemmungsstellung einnimmt, wird mit Hilfe des erfindungsgemäßen Zuführtrichters eine sichere und stabile Anordnung der Trichterwände in der Arbeitsposition gewährleistet.

Von besonderem Vorteil ist es in Ausgestaltung der Erfindung, wenn die Trichterwand ein Eigengewicht aufweist, wobei in der Arbeitsposition die Trichterwand mit ihrem Eigengewicht das Hebelsystem in die Selbsthemmungsstellung drängend ausgebildet ist. Das Eigengewicht der Trichterwand wird damit dazu genutzt, das Hebelsystem in der Selbsthemmungsstellung zu halten, wodurch gleichzeitig die Trichterwand selbst in der Arbeitsposition gehalten angeordnet ist.

Für einen geringen Energieaufwand zum Bewegen einer jeweiligen Trichterwand sieht die Erfindung in weiterer Ausgestaltung vor, dass das Hebelsystem bei einer Bewegung des aus der Selbsthemmungsstellung in die Faltstellung oder aus der Faltstellung in die Selbsthemmungsstellung eine Strecklage überschreitend ausgebildet ist. Gleichzeitig ergibt sich durch das Vorhandensein einer Strecklage eine stabile Verriegelung des Hebelsystems sowohl in der Selbsthemmungsstellung als auch in der Faltstellung.

Aus Sicherheitsgründen, um eine unbeabsichtigte Bewegung der Trichterwand über die Strecklage bzw. ein ungewolltes Durchschreiten der Strecklage zu vermeiden, sieht die Erfindung in weiterer Ausgestaltung vor, dass das Hebelsystem ein Widerstandselement aufweist, welches ein Durchschreiten bzw. Überschreiten der Strecklage gegen eine von dem Widerstandselement ausgeübte Widerstandskraft zulassend ausgebildet ist.

Im Hinblick auf eine kompakte und platzsparende Bauweise ist in Ausgestaltung der Erfindung vorgesehen, dass das Hebelsystem ein erstes Hebelelement und ein zweites Hebelelement aufweist, wobei das erste Hebelelement und das zweite Hebelelement relativ zueinander bewegbar ausgebildet sind und miteinander gelenkig verbunden sind, und wobei das zweite Hebelelement mit dem Gestell gelenkig verbunden ist und das erste Hebelelement mit der Trichterwand verbunden ist.

Für eine stabile Lage der Trichterwand sowohl in der Arbeitsposition als auch in der Transportposition ist es in Ausgestaltung der Erfindung von Vorteil, wenn bei einer Bewegung aus der Selbsthemmungsstellung in die Faltstellung und/oder aus der Faltstellung in die Selbsthemmungsstellung das erste Hebelelement und das zweite Hebelelement einen Totpunkt überschreitend ausgebildet und gelagert sind.

Für ein definiertes Überschreiten des Totpunktes ist in weiterer Ausgestaltung der Erfindung vorgesehen, dass das erste Hebelelement in seiner Längserstreckung verstellbar ausgebildet ist und das erste Hebelelement in der Selbsthemmungsstellung und in der Faltstellung eine größere Längserstreckung als in dem Totpunkt aufweist.

Aus Sicherheitsgründen und für das definierte Überschreiten des Totpunktes sieht die Erfindung in weiterer Ausgestaltung vor, dass das erste Hebelelement ein Gegenkraftelement aufweist, welches ein Überschreiten des Totpunktes bei einer Bewegung aus der Selbsthemmungsstellung in die Faltstellung und/oder aus der Faltstellung in die Selbsthemmungsstellung gegen eine von dem Gegenkraftelement ausgeübte Gegenkraft zulassend ausgebildet ist.

Entsprechend ist in weiterer Ausgestaltung der Erfindung vorgesehen, dass das Gegenkraftelement ein Verstellen der Längserstreckung des ersten Hebelelements gegen die von dem Gegenkraftelement ausgeübte Gegenkraft zulassend ausgebildet ist.

Besonders günstig und konstruktiv einfach ist es in Ausgestaltung der Erfindung, wenn das Gegenkraftelement ein elastisches Federelement aufweist.

Zur sicheren Positionierung einer jeweiligen Trichterwand ist in Ausgestaltung der Erfindung vorgesehen, dass das erste Hebelelement und/oder das zweite Hebelelement in der Selbsthemmungsstellung zumindest abschnittsweise an einer Auflage anliegend abgestützt angeordnet ist/sind.

Für eine variable Ausrichtung der Neigung einer jeweiligen Trichterwand in der Arbeitsposition sieht die Erfindung in Ausgestaltung vor, dass die Auflage verstellbar befestigt ist.

Für eine Erzeugung großer Kräfte zur Bewegung einer Trichterwand bei gleichzeitig kompakter Bauweise sieht die Erfindung in Ausgestaltung vor, dass die Antriebsvorrichtung als ein Hydraulikzylinder ausgebildet ist, welcher an dem ersten Hebelelement und/oder dem zweiten Hebelelement angreift. "Angreifen" im Sinne der Erfindung bedeutet, dass der Hydraulikzylinder mit dem ersten Hebelelement und/oder dem zweiten Hebelelement antreibend verbunden ist und das erste Hebelelement und/oder das zweite Hebelelement bewegend ausgebildet ist. Alternativ kann der Hydraulikzylinder auch an einem Gelenkpunkt angreifen, über welchen das erste Hebelelement und das zweite Hebelelement miteinander gelenkig verbunden sind.

Im Hinblick auf eine kompakte Anordnung beim Transport sieht die Erfindung in weiterer Ausgestaltung vor, dass in der Faltstellung das erste Hebelelement und das zweite Hebelelement zusammengefaltet und einen eingeschlossenen Winkel von weniger als 90° aufweisend angeordnet sind. Bei dieser Anordnung des ersten Hebelelements und des zweiten Hebelelements ist die Trichterwand weggeklappt angeordnet, um die Höhe der Materialverarbeitungsmaschine auf ein Minimum zu reduzieren.

Ein besonders kompaktes Zusammenfalten der beiden Hebelelemente ist in Ausgestaltung der Erfindung dadurch möglich, dass bei einer Bewegung aus der Faltstellung in die Selbsthemmungsstellung und/oder aus der Selbsthemmungsstellung in die Faltstellung eine Drehrichtung des ersten Hebelelements entgegengesetzt zu einer Drehrichtung des zweiten Hebelelements ist.

Schließlich sieht die Erfindung in weiterer Ausgestaltung vor, dass die Trichterwände Seitenkanten aufweisen, welche in der Arbeitsposition aneinander angrenzend verlaufend angeordnet sind, wobei an den Seitenkanten von zwei benachbart zueinander angeordneten Trichterwänden Verriegelungsmittel ausgebildet sind, welche in der Arbeitsposition miteinander in Eingriff stehend und die zwei benachbart zueinander angeordneten Trichterwände in der Arbeitsposition verriegelnd haltend ausgebildet sind. Die zwei benachbart zueinander angeordneten Trichterwände können dabei eine Ecke des Zuführtrichters ausbilden, wobei die Verriegelungsmittel Keile, Bolzen oder Fanghaken aufweisen können.

Es versteht sich, dass die vorstehend genannten und nachstehenden noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Der Rahmen der Erfindung ist nur durch die Ansprüche definiert.

Weitere Einzelheiten, Merkmale und Vorteile des Gegenstandes der Erfindung ergeben sich aus der nachfolgenden Beschreibung im Zusammenhang mit der Zeichnung, in der ein beispielhaftes bevorzugtes Ausführungsbeispiel der Erfindung dargestellt ist:

In der Zeichnung zeigt:
Figur 1 eine perspektivische Ansicht auf einen erfindungsgemäßen Zuführtrichter,
Figur 2 eine weitere perspektivische Ansicht auf den erfindungsgemäßen Zuführtrichter,
Figur 3 eine Perspektivansicht auf eine in einer Arbeitsposition angeordneten Trichterwand des erfindungsgemäßen Zuführtrichters,
Figur 4 eine weitere Perspektivansicht auf die in Figur 3 gezeigte und in der Arbeitsposition angeordneten Trichterwand des erfindungsgemäßen Zuführtrichters,
Figur 5 eine Perspektivansicht auf die in einer Transportposition angeordneten Trichterwand des erfindungsgemäßen Zuführtrichters,
Figur 6 eine weitere Perspektivansicht auf die in Figur 5 gezeigte und in der Transportposition angeordneten Trichterwand des erfindungsgemäßen Zuführtrichters,
Figur 7 eine perspektivische Explosionsansicht auf die Trichterwand und zwei Trichterwand-Stellvorrichtungen des erfindungsgemäßen Zuführtrichters,
Figur 8 eine perspektivische Vorderansicht auf eine Trichterwand-Stellvorrichtung des erfindungsgemäßen Zuführtrichters,
Figur 9 eine perspektivische Rückansicht auf die Trichterwand-Stellvorrichtung des erfindungsgemäßen Zuführtrichters,
Figur 10 eine perspektivische Einzelteildarstellung der Trichterwand-Stellvorrichtung,
Figur 11 eine perspektivische Ansicht auf die Trichterwand-Stellvorrichtung, wobei ein Gestell der Trichterwand-Stellvorrichtung ausgeblendet ist.
Figur 12 eine Perspektivansicht auf ein Hebelelement der Trichterwand-Stellvorrichtung,
Figur 13 eine weitere Perspektivansicht auf das in Figur 11 gezeigte Hebelelement der Trichterwand-Stellvorrichtung,
Figur 14 eine perspektivische Schnittansicht auf das Hebelelement der Trichterwand-Stellvorrichtung,
Figur 15 eine Seitenansicht auf eine in der Arbeitsposition angeordnete Trichterwand und auf eine Trichterwand-Stellvorrichtung,
Figur 16 eine vergrößerte Schnittansicht auf ein Hebelelement der Trichterwand-Stellvorrichtung aus Figur 14,
Figur 17 eine Seitenansicht auf eine zwischen der Arbeitsposition und der Transportposition angeordneten Trichterwand und auf eine Trichterwand-Stellvorrichtung mit einem Hebelsystem, welches in einer Strecklage angeordnet ist,
Figur 18 eine vergrößerte Schnittansicht auf ein Hebelelement der Trichterwand-Stellvorrichtung aus Figur 16,
Figur 19 eine Seitenansicht auf eine zwischen der Arbeitsposition und der Transportposition angeordneten Trichterwand und auf eine Trichterwand-Stellvorrichtung mit einem Hebelsystem, welches die Strecklage durchschritten hat,
Figur 20 eine Seitenansicht auf eine in der Transportposition angeordnete Trichterwand und auf eine Trichterwand-Stellvorrichtung,
Figur 21 eine vergrößerte Perspektivansicht auf zwei in ihrer Arbeitsposition angeordnete Trichterwände, welche mit Verriegelungsmitteln, welche nach Art eines Bolzens ausgebildet sind, miteinander in Eingriff stehen,
Figur 22 eine weitere vergrößerte Perspektivansicht auf die Verriegelungsmittel aus Figur 21,
Figur 23 eine vergrößerte Perspektivansicht auf zwei in ihrer Arbeitsposition angeordnete Trichterwände, welche mit Verriegelungsmitteln, welche nach Art eines Fanghakens ausgebildet sind, miteinander in Eingriff stehen,
Figur 24 eine weitere vergrößerte Perspektivansicht auf die Verriegelungsmittel aus Figur 23, und
Figur 25 eine Weiterbildung der Trichterwand-Stellvorrichtung mit einem Sicherungsanschlag für eine Trichterwand.

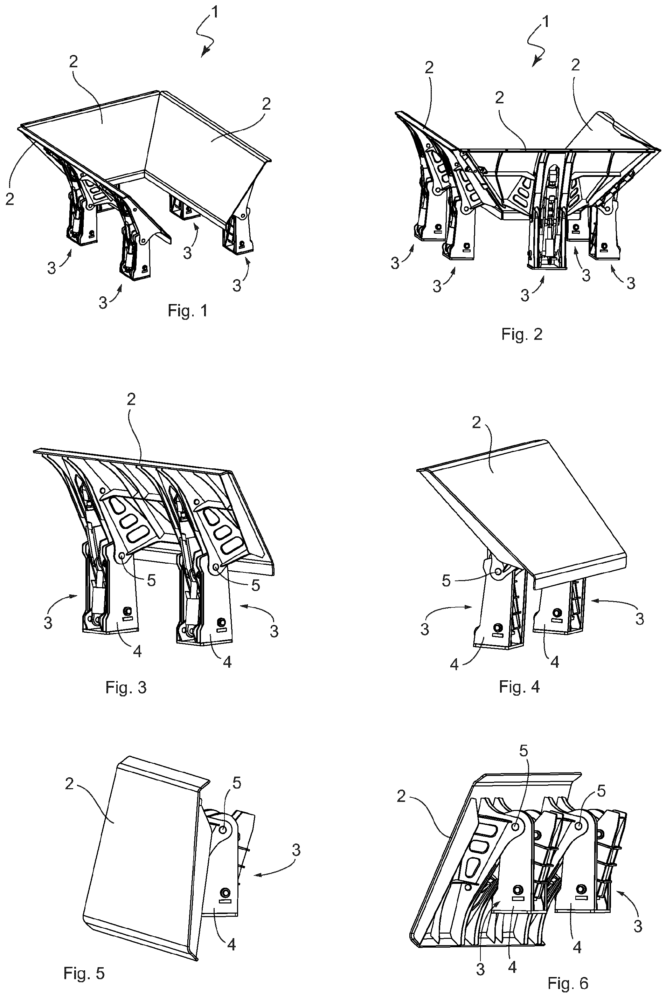

In den Figuren 1 und 2 ist ein erfindungsgemäßer Zuführtrichter 1 für eine Materialverarbeitungsmaschine in verschiedenen Perspektivansichten dargestellt. Der Zuführtrichter 1 weist mehrere Trichterwände 2 auf, wobei bei dem in den Figuren gezeigten Ausführungsbeispiel der Zuführtrichter 1 insgesamt drei Trichterwände 2 umfasst. Jede Trichterwand 2 ist in eine Arbeitsposition und in eine Transportposition bewegbar gelagert, wobei die Trichterwände 2 in den Figuren 1 und 2 in der Arbeitsposition angeordnet sind, in welcher die Trichterwände 2 eine Aufnahme und Zuführung von zu verarbeitendem Material ermöglichend angeordnet sind. In der Transportposition hingegen sind die Trichterwände 2 zum Transport kompakt weggeklappt an der Materialverarbeitungsmaschine angeordnet. Jeder der Trichterwände 2 ist wenigstens eine zum Bewegen einer jeweiligen Trichterwand 2 ausgebildete Trichterwand-Stellvorrichtung 3 zugeordnet. Wie aus den Figuren 1 und 2 ersichtlich ist, sind dabei den beiden parallel zueinander verlaufend angeordneten Trichterwänden 2 jeweils zwei Trichterwand-Stellvorrichtungen 3 zugeordnet, wohingegen der zwischen den beiden parallel verlaufend angeordneten Trichterwänden 2 und stirnseitig angeordneten Trichterwand 2 eine einzige Trichterwand-Stellvorrichtung 3 zugeordnet ist. Eine jeweilige Trichterwand-Stellvorrichtung 3 ist dabei derart ausgebildet, dass sie die zugeordnete Trichterwand 2 aus der Transportposition in die Arbeitsposition oder aus der Arbeitsposition in die Transportposition bewegt.

In den Figuren 3 bis 6 ist eine Trichterwand 2 gezeigt, welcher zwei Trichterwand-Stellvorrichtungen 3 zugeordnet sind. In der nachstehenden Beschreibung wird der Aufbau für eine einzige Trichterwand-Stellvorrichtung 3 beschrieben, wobei es ersichtlich ist, dass sich die Beschreibung des Aufbaus auf jede einzelne, in den Figuren 1 und 2 gezeigte Trichterwand-Stellvorrichtung 3 bezieht, da alle Trichterwand-Stellvorrichtungen 3 identisch ausgebildet sind.

Die Trichterwand-Stellvorrichtung 3 weist wenigstens ein Gestell 4 auf, wobei die Trichterwand 2 an dem Gestell 4 über eine Schwenkachse 5 schwenkbar gelagert ist, wie es aus den Figuren 3 bis 6 ersichtlich ist. Das Gestell 4 kann an der Materialverarbeitungsmaschine befestigbar ausgebildet sein, wobei es auch denkbar ist, dass das Gestell 4 als Teil der Materialverarbeitungsmaschine oder eines Chassis der Materialverarbeitungsmaschine ausgebildet ist. Dabei zeigen die Figuren 3 und 4 verschiedene Perspektivansichten für die in der Arbeitsposition angeordnete Trichterwand 2, wohingegen in den Figuren 5 und 6 verschiedene Perspektivansichten für die in der Transportposition angeordnete Trichterwand 2 gezeigt sind.

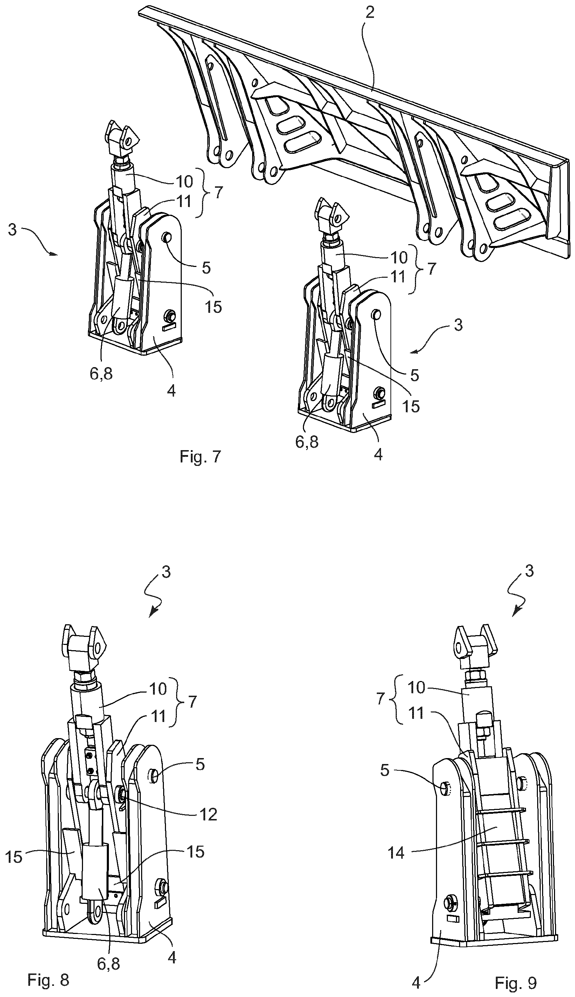

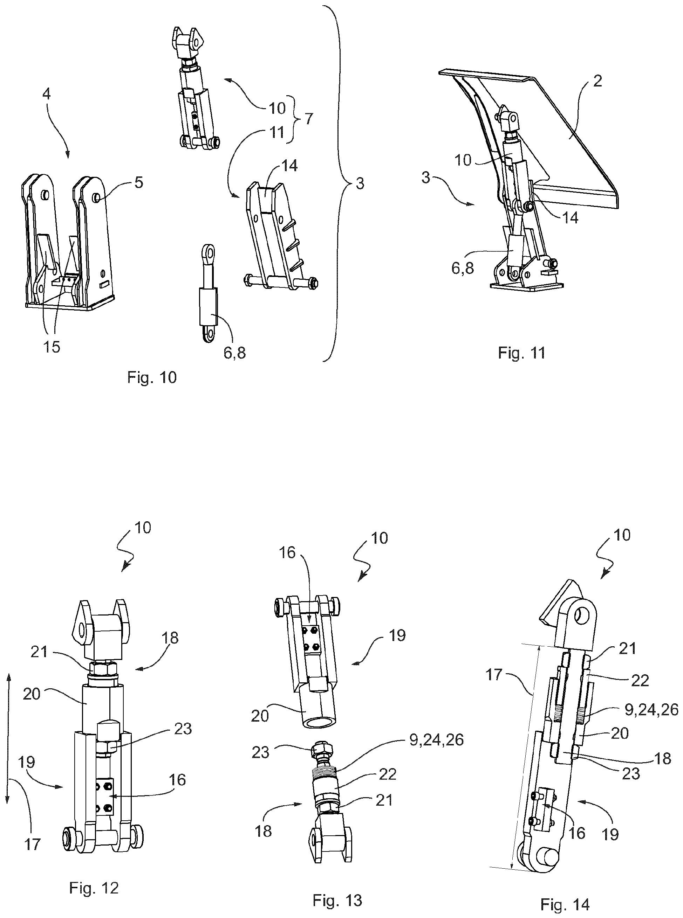

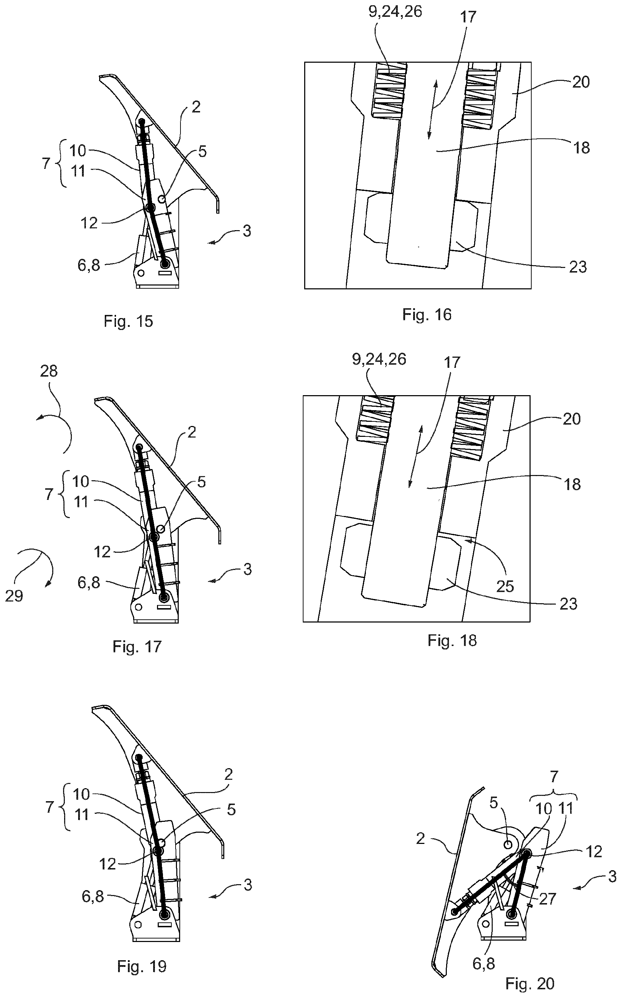

Nachstehend wird Bezug auf die Figuren 7 bis 14 genommen, in denen der Aufbau der Trichterwand-Stellvorrichtung 3 dargestellt ist. Wie zum Beispiel die Figuren 7 bis 9 zeigen, weist die Trichterwand-Stellvorrichtung 3 eine an dem wenigstens einen Gestell 4 bewegbar gelagerte Antriebsvorrichtung 6 und ein zum Bewegen der zugeordneten Trichterwand 2 ausgebildetes Hebelsystem 7 auf. Das Hebelsystem 7 ist schwenkbar an dem Gestell 4 gelagert und zusätzlich mit der Trichterwand 2 verbunden. Die Antriebsvorrichtung 6 ist mit einem seiner Längsenden schwenkbar an dem Gestell 4 gelagert. Ferner ist die Antriebsvorrichtung 6 als ein Hydraulikzylinder 8 ausgebildet und mit dem Hebelsystem 7 bewegungsgekoppelt, wobei "bewegungsgekoppelt" in dem Sinne zu verstehen ist, dass die Antriebsvorrichtung 6 mit dem Hebelsystem 6 antriebsverbunden ausgebildet ist und das Hebelsystem 6 bewegt. Das mit Hilfe der Antriebsvorrichtung 6 bewegte Hebelsystem 7 ist in eine Selbsthemmungsstellung (siehe zum Beispiel Figur 15) und in eine Faltstellung (siehe zum Beispiel Figur 20) an dem Gestell 4 bewegbar gelagert. Folglich ist die Antriebsvorrichtung 6 das Hebelsystem 7 in die Selbsthemmungsstellung und/oder in die Faltstellung bewegend ausgebildet. In der Faltstellung des Hebelsystems 7 ist die Trichterwand 2 in der Transportposition angeordnet, wobei das Hebelsystem 7 in der Faltstellung eine kompakte und wenig Bauraum beanspruchende Stellung einnimmt. In der Selbsthemmungsstellung des Hebelsystems 7 ist die Trichterwand 2 in der Arbeitsposition angeordnet, wobei das Hebelsystem 7 die Trichterwand 2 in der Arbeitsposition selbsthemmend haltend ausgebildet ist. Dabei kann es sich um eine statische Selbsthemmung des Hebelsystems 7 handeln, welche die Selbsthemmungsstellung beibehält, solange keine Kraft auf das Hebelsystem 7 einwirkt. Die einwirkende Kraft stammt dabei einzig und allein von der Antriebsvorrichtung 6, welche das Hebelsystem 7 aus der Selbsthemmungsstellung heraus in die Faltstellung bewegt. Bei der Selbsthemmungsstellung ist zu beachten, dass die Trichterwand 2 ein Eigengewicht aufweist, wobei in der Arbeitsposition die Trichterwand 2 mit ihrem Eigengewicht das Hebelsystem 7 in die Selbsthemmungsstellung drängend ausgebildet ist. Ferner ist das Hebelsystem 7 bei einer Bewegung des aus der Selbsthemmungsstellung in die Faltstellung oder aus der Faltstellung in die Selbsthemmungsstellung eine Strecklage überschreitend ausgebildet. Die Strecklage des Hebelsystems 7 stellt eine spezielle Stellung dar, in welcher Hebelelemente des Hebelsystems 7 in einer Linie angeordnet sind. Beim Überschreiten der Strecklage kommt es insbesondere in der Selbsthemmungsstellung zu einem Selbsthemmungseffekt des Hebelsystems 7. Aus Sicherheitsgründen weist das Hebelsystem 7 ein Widerstandselement 9 auf, welches beispielsweise in den Figuren 13 und 14 gezeigt ist und welches ein Überschreiten der Strecklage gegen eine von dem Widerstandselement 9 ausgeübte Widerstandskraft zulassend ausgebildet ist.

Aus der Zusammenschau der Figuren 7 bis 20 geht hervor, dass die Antriebsvorrichtung 6 und das Hebelsystem 7 zwischen zwei Seitenwänden des Gestells 4 angeordnet ist. Das Hebelsystem 7 weist dabei ein erstes Hebelelement 10 und ein zweites Hebelelement 11 auf, wobei das erste Hebelelement 10 und das zweite Hebelelement 11 relativ zueinander bewegbar ausgebildet sind. Ferner sind das erste Hebelelement 10 und das zweite Hebelelement 11 über eine Gelenkachse 12 (siehe zum Beispiel Figuren 8, 15, 17, 19 und 20) miteinander gelenkig verbunden. Das erste Hebelelement 10 ist mit einem seiner beiden Längsenden mit der Trichterwand 2 verbunden, wohingegen das andere Längsende des ersten Hebelelements 10 über die Gelenkachse 12 mit dem zweiten Hebelelement 11 gelenkig verbunden ist. Das zweite Hebelelement 11 ist mit einem seiner beiden Längsenden über die Gelenkachse 12 mit dem ersten Hebelelement 10 gelenkig verbunden, wohingegen das andere Längsende des zweiten Hebelelements 11 schwenkbar an dem Gestell 4 gelagert und gelenkig mit dem Gestell 4 verbunden ist. In der Selbsthemmungsstellung ist das erste Hebelelement 10 zumindest abschnittsweise an einer Auflage 14 anliegend abgestützt angeordnet. Die Auflage 14 ist dabei an dem zweiten Hebelelement 11 ausgebildet (siehe zum Beispiel Figuren 10 und 11), so dass die Auflage 14 für das erste Hebelelement 10 mit dem zweiten Hebelelement 11 mitbewegbar gelagert ist. In der Selbsthemmungsstellung kann aber auch optional das zweite Hebelelement 11 abgestützt sein, wie es bei dem in den Figuren gezeigten Ausführungsbeispiel der Fall ist. Wie diesbezüglich aus der Figur 7 hervorgeht, ist in der Selbsthemmungsstellung das zweite Hebelelement 11 an einer Zusatz-Auflage 15 abgestützt angeordnet, wobei die Zusatz-Auflage 15 an dem Gestell 4 befestigt ist. Folglich können das erste Hebelelement 10 und/oder das zweite Hebelelement 11 in der Selbsthemmungsstellung zumindest abschnittsweise an jeweiligen Auflagen 14 bzw. 15 anliegend abgestützt angeordnet sein. Die Auflage 14 kann dabei ferner an dem zweiten Hebelelement 11 verstellbar befestigt sein oder aber, wie es in dem Ausführungsbeispiel bezeigt ist, kann der Abstand zu der Auflage 14 mittels Stellschrauben 16, welche an dem ersten Hebelelement 10 angeordnet und in der Selbsthemmungsstellung der Auflage 14 gegenüberliegend angeordnet sind, verändert werden.

Wie aus der Zusammenschau der Figuren 12 bis 20 ersichtlich ist, ist das erste Hebelelement 10 in seiner Längserstreckung 17 (siehe zum Beispiel Figur 14) verstellbar ausgebildet. Zu diesem Zweck ist das erste Hebelelement 10 mit einem Kopfteil 18 und einem Fußteil 19 mehrteilig ausgebildet. Das Kopfteil 18 ist an einem Längsende mit der Trichterwand 2 verbunden, wohingegen ein Längsende des Fußteils 19 mit der Gelenkachse 12 gelenkig verbunden ist. Das erste Hebelelement 10 weist ferner eine Kopplungsbuchse 20 auf, welche an dem anderen Längsende des Fußteils 19 befestigt ist. Das Kopfteil 18 ist bolzenförmig ausgebildet und durchdringt die Kopplungsbuchse 20, wobei das die Kopplungsbuchse 20 durchdringende Längsende des Kopfteils 18 ein Gewinde aufweist, auf welches eine Haltemutter 21 aufgeschraubt ist. In die hohle und im Inneren gestuft ausgebildete Kopplungsbuchse 20 ist eine Bewegungsbuchse 22 eingeschoben, wie es beispielsweise der Schnittdarstellung der Figur 14 zu entnehmen ist. Das bolzenförmig ausgebildete Kopfteil 18 erstreckt sich auch durch die Bewegungsbuchse 22 und durchdringt diese, wobei auf der der Haltemutter 21 abgewandten Seite der Kopplungsbuchse 20 eine weitere Haltemutter 23 auf das Kopfteil 18 aufgeschraubt ist, welche sich auf der Bewegungsbuchse 22 abstützt. Die in die Kopplungsbuchse 20 eingesteckte Bewegungsbuchse 22 liegt innerhalb der Kopplungsbuchse 20 auf einem elastisch verformbar ausgebildeten Gegenkraftelement 24 auf, so dass das Kopfteil 18 gegen die Gegenkraft des Gegenkraftelements 24 in Richtung des Fußteils 19 bewegbar gehalten ist. Auf diese Weise ist das erste Hebelelement 10 in seiner Längserstreckung 17 verstellbar ausgebildet. Eine Änderung der Längserstreckung 17 ist für eine Bewegung der Trichterwand 2 und für das Hebelsystem 7 notwendig, damit das Hebelsystem 7 die Strecklage bzw. das erste Hebelelement 10 und das zweite Hebelelement 11 einen Totpunkt durchschreiten können. Somit sind bei einer Bewegung aus der Selbsthemmungsstellung in die Faltstellung und/oder aus der Faltstellung in die Selbsthemmungsstellung das erste Hebelelement 10 und das zweite Hebelelement 11 den Totpunkt bzw. die Strecklage überschreitend ausgebildet sind. Die Anordnung des Hebelsystems 7 mit seinem ersten Hebelelement 10 und seinem zweiten Hebelelement 11 im Totpunkt bzw. in der Strecklage ist in der Figur 17 dargestellt, in welcher das erste Hebelelement 10 und das zweite Hebelelement 11 in Linie und eine Gerade bildend angeordnet sind. Die Figur 18 zeigt für diese Stellung im Totpunkt eine vergrößerte Schnittansicht, aus welcher ersichtlich ist, dass das bolzenförmige Kopfteil 18 in Richtung des Fußteils 19 verschoben angeordnet ist, so dass ein Spalt 25 zwischen der Haltemutter 23 und der Kopplungsbuchse 20 ausgebildet ist. Die Bewegung der Trennwand 2 aus der Arbeitsposition in die Transportposition und aus der Transportposition in die Arbeitsposition wird dabei mit Hilfe der Antriebsvorrichtung 6 bewirkt. Die als Hydraulikzylinder 8 ausgebildete Antriebsvorrichtung greift an einem Gelenkpunkt an, welcher der Gelenkachse 12 entspricht, über welche das erste Hebelelement 10 und das zweite Hebelelement 11 miteinander gelenkig verbunden sind. Beim Durchschreiten der Strecklage bzw. des Totpunktes wird der Kopfteil 18 gegen die Gegenkraft des Gegenkraftelements 24 in Richtung des Fußteils verschoben, wie es in Figur 17 gezeigt ist. In Figur 15 sind die Trennwand 2 in der Arbeitsposition und das Hebelsystem 7 in der Selbsthemmungsstellung angeordnet.

Somit weist das erste Hebelelement 10 ein Gegenkraftelement 24 auf, welches ein Überschreiten des Totpunktes bei einer Bewegung aus der Selbsthemmungsstellung in die Faltstellung und/oder aus der Faltstellung in die Selbsthemmungsstellung gegen die von dem Gegenkraftelement 24 ausgeübte Gegenkraft zulassend ausgebildet ist. Das Gegenkraftelement 24 ist derart ausgebildet, dass es ein Verstellen der Längserstreckung 17 des ersten Hebelelements 10 gegen die von dem Gegenkraftelement 24 ausgeübte Gegenkraft zulässt. Dabei weist das Gegenkraftelement 24 ein elastisches Federelement 26 auf.

Wie aus der vergrößerten Schnittansicht der Figur 16 zu entnehmen ist, ist bei dieser Anordnung die Haltemutter 23 an der Kopplungsbuchse 20 anliegend angeordnet, so kein Spalt ausgebildet ist und das erste Hebelelement 10 seine maximale Längserstreckung 17 aufweist, welche größer ist als in dem Totpunkt (vergleiche Figur 18). Die Figur 19 zeigt eine Anordnung, bei welcher das Hebelsystem 7 gerade die Strecklage bzw. den Totpunkt durchschritten hat und sich in Richtung der Faltstellung bewegt, welche in der Figur 20 gezeigt ist. Auch in der in Figur 19 gezeigten Stellung und in der Faltstellung ist die Haltemutter 23 an der Kopplungsbuchse 20 anliegend angeordnet, so wie es in der Figur 16 gezeigt ist. Somit weist das erste Hebelelement 10 in der Selbsthemmungsstellung und in der Faltstellung eine größere Längserstreckung 17 als in dem Totpunkt auf. In der Faltstellung sind das erste Hebelelement 10 und das zweite Hebelelement 11 zusammengefaltet und einen eingeschlossenen Winkel 27 von weniger als 90° aufweisend angeordnet (siehe Figur 19). Schließlich geht aus der Zusammenschau der Figuren 15, 17, 19 und 20 hervor, dass bei einer Bewegung aus der Faltstellung in die Selbsthemmungsstellung und/oder aus der Selbsthemmungsstellung in die Faltstellung eine Drehrichtung 28 des ersten Hebelelements 10 entgegengesetzt zu einer Drehrichtung 29 des zweiten Hebelelements 11 ist.

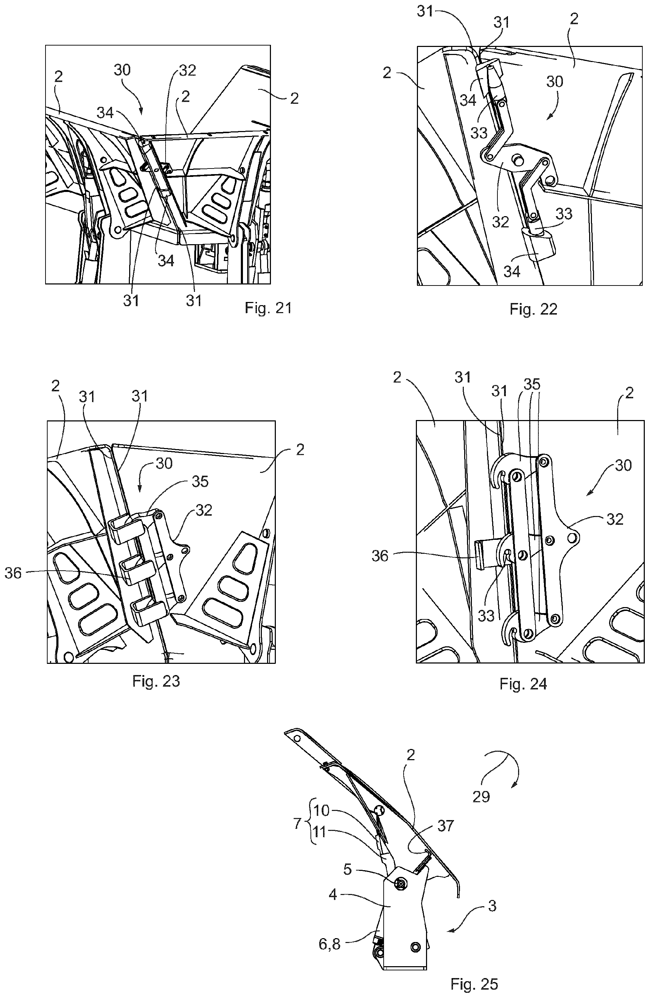

Die Figuren 21 bis 24 zeigen optionale Ausgestaltungen des erfindungsgemäßen Zuführtrichters 1, wobei sich diese Ausgestaltungen auf Verriegelungsmittel 30 beziehen, welche dazu ausgebildet sind, die Trichterwände 2 zusätzlich in der Arbeitsposition zu halten und zu stabilisieren. Die Verriegelungsmittel 30 in den Figuren 21 bis 24 haben gemeinsam, dass sie zweiteilig aufgebaut sind, an Seitenkanten 31 von zwei benachbarten Trichterwänden 2 angeordnet sind und in der Arbeitsposition der Trichterwände 2 miteinander in Eingriff stehen. Dabei zeigen die Figuren 21 und 22 eine Ausgestaltung von Verriegelungsmitteln 30, welche nach Art eines Bolzens ausgebildet sind. Über einen Hebelmechanismus 32 sind zwei Sperrbolzen 33 entlang der Seitenkante 31 einer Trichterwand 2 bewegbar, wobei die zwei Sperrbolzen 33 in entgegengesetzte Richtungen bewegt werden, wenn die Trichterwände 2 in der Arbeitsposition angeordnet sind. Bei dieser entgegengesetzten Bewegung gelangen die zwei Sperrbolzen 33 jeweils in Sperrbolzen-Aufnahmen 34, welche an der Seitenkante 31 der benachbarten und angrenzenden Trichterwand 2 ausgebildet und angeordnet sind, und stehen mit den Sperrbolzen-Aufnahmen 34 in Eingriff. Demgegenüber zeigen die Figuren 23 und 24 eine Ausgestaltung von Verriegelungsmitteln 30, welche nach Art eines Fanghakens ausgebildet sind. Zu diesem Zweck ist an einer Seitenkante 31 einer Trichterwand 2 ebenfalls ein Hebelmechanismus 32 vorgesehen, mit dessen Hilfe mehrere Fanghaken 35 in Richtung der Seitenkante 31 der benachbarten Trichterwand 2 bewegt oder von der benachbarten Trichterwand 22 zurückbewegt werden können. An der Seitenkante 31 der benachbarten Trichterwand 2 sind Sperrbolzen 33 angeordnet, wobei lediglich in der Figur 24 ein solcher Sperrbolzen 33 für einen Schnitt durch eine Sperrbolzenhalterung 36 gezeigt ist (insgesamt sind drei Sperrbolzenhalterungen 36 mit drei Sperrbolzen 33 für die drei Fanghaken 35 vorgesehen). In den Figuren 23 und 24 ist gezeigt, dass die Trichterwände 2 in der Arbeitsposition angeordnet sind, wobei der Hebelmechanismus 32 bereits die Fanghaken 35 in Richtung der benachbarten Trichterwand 2 bewegt hat, wobei die Fanghaken 35 mit den Sperrbolzen 33 in Eingriff stehen. Mit Hilfe der Verriegelungsmittel 30 gemäß den Figuren 21 bis 24 kann eine zuverlässige Eckverriegelung für benachbarte Trichterwände 2 realisiert werden.

In der Figur 25 ist schließlich eine Weiterbildung der erfindungsgemäßen Trichterwand-Stellvorrichtung 3 gezeigt. Bei der in Figur 25 gezeigten Trichterwand-Stellvorrichtung 3 ist an dem Gestell 4 ein Sicherungsanschlag 37 angeordnet und befestigt. Der Sicherungsanschlag 37 ist L-förmig mit zwei Schenkeln ausgebildet, wobei ein Schenkel des Sicherungsanschlags 37 an dem Gestell 4 befestig ist und der andere Schenkel als Anschlagswandung dienend ausgebildet ist. Der Sicherungsanschlag 37 ist zum Abstützen der Trichterwand 4 ausgebildet, wenn das Hebelsystem 7 infolge einer zu starken Beanspruchung beispielsweise nicht mehr die Betriebsposition der Trichterwand 4 halten sollte. In diesem Fall würde sich die Trichterwand 4 weiter in die Drehrichtung 29 drehen und über die Betriebsposition hinaus so weit bewegt werden, bis die Trichterwand 4 an dem Sicherungsanschlag 37 anliegt, welcher dann die Trichterwand 4 abstützt. Der Sicherungsanschlag 37 ist lediglich als Sicherung vorgesehen. Denn in der Betriebsposition ist die Trichterwand 4 von dem Sicherungsanschlag 37 beabstandet angeordnet und nicht in Kontakt mit dem Sicherungsanschlag 37.

Die vorstehend beschriebene Erfindung ist selbstverständlich nicht auf die beschriebene und dargestellte Ausführungsform beschränkt. Es ist ersichtlich, dass an der in der Zeichnung dargestellten Ausführungsform zahlreiche, dem Fachmann entsprechend der beabsichtigten Anwendung naheliegende Abänderungen vorgenommen werden können, ohne dass dadurch der Bereich der Erfindung verlassen wird. Zur Erfindung gehört alles dasjenige, was in der Beschreibung enthalten und/oder in der Zeichnung dargestellt ist, einschließlich dessen, was abweichend von dem konkreten Ausführungsbeispiel für den Fachmann naheliegt.

### Bezugszeichenliste

- 1: Zuführtrichter
- 2: Trichterwände
- 3: Trichterwand-Stellvorrichtung
- 4: Gestell
- 5: Schwenkachse
- 6: Antriebsvorrichtung
- 7: Hebelsystem
- 8: Hydraulikzylinder
- 9: Widerstandselement
- 10: erstes Hebelelement
- 11: zweites Hebelelement
- 12: Gelenkachse
- 14: Auflage
- 15: Zusatz-Auflage
- 16: Stellschrauben
- 17: Längserstreckung
- 18: Kopfteil
- 19: Fußteil
- 20: Kopplungsbuchse
- 21: Haltemutter
- 22: Bewegungsbuchse
- 23: Haltemutter
- 24: Gegenkraftelement
- 25: Spalt
- 26: Federelement
- 27: eingeschlossener Winkel
- 28: Drehrichtung
- 29: Drehrichtung
- 30: Verriegelungsmittel
- 31: Seitenkante
- 32: Hebelmechanismus
- 33: Sperrbolzen
- 34: Sperrbolzen-Aufnahme
- 35: Fanghaken
- 36: Sperrbolzenhalterung
- 37: Sicherungsanschlag

## Patentansprüche

1. Zuführtrichter (1) für eine Materialverarbeitungsmaschine mit mehreren Trichterwänden (2), welche jeweils in eine Arbeitsposition, in welcher die Trichterwände (2) eine Aufnahme und Zuführung von zu verarbeitendem Material ermöglichend angeordnet sind, und eine Transportposition, in welcher die Trichterwände (2) zum Transport kompakt weggeklappt an der Materialverarbeitungsmaschine angeordnet sind, bewegbar gelagert sind,
wobei jeder der Trichterwände (2) wenigstens eine Trichterwand-Stellvorrichtung (3) zugeordnet ist,
wobei die wenigstens eine Trichterwand-Stellvorrichtung (3) wenigstens ein Gestell (4), eine an dem wenigstens einen Gestell (4) bewegbar gelagerte Antriebsvorrichtung (6) und ein zum Bewegen der zugeordneten Trichterwand (2) ausgebildetes Hebelsystem (7), welches in eine Selbsthemmungsstellung und eine Faltstellung an dem wenigstens einen Gestell (4) bewegbar gelagert ist, aufweist
wobei die Antriebsvorrichtung (6) mit dem Hebelsystem (7) bewegungsgekoppelt verbunden ist und die Antriebsvorrichtung (6) das Hebelsystem (7) in die Selbsthemmungsstellung und/oder in die Faltstellung bewegend ausgebildet ist, und
wobei in der Arbeitsposition der Trichterwand (2) das Hebelsystem (7) in der Selbsthemmungsstellung angeordnet ist und das Hebelsystem (7) die Trichterwand (2) in der Arbeitsposition selbsthemmend haltend ausgebildet ist.

2. Zuführtrichter (1) nach Anspruch 1, wobei die Trichterwand (2) ein Eigengewicht aufweist und in der Arbeitsposition die Trichterwand (2) mit ihrem Eigengewicht das Hebelsystem (7) in die Selbsthemmungsstellung drängend ausgebildet ist.

3. Zuführtrichter (1) nach Anspruch 1 oder 2, wobei das Hebelsystem (7) bei einer Bewegung des aus der Selbsthemmungsstellung in die Faltstellung oder aus der Faltstellung in die Selbsthemmungsstellung eine Strecklage überschreitend ausgebildet ist.

4. Zuführtrichter (1) nach Anspruch 3, wobei das Hebelsystem (7) ein Widerstandselement (9) aufweist, welches ein Überschreiten der Strecklage gegen eine von dem Widerstandselement (9) ausgeübte Widerstandskraft zulassend ausgebildet ist.

5. Zuführtrichter (1) nach einem der vorhergehenden Ansprüche, wobei das Hebelsystem (7) ein erstes Hebelelement (10) und ein zweites Hebelelement (11) aufweist,
wobei das erste Hebelelement (10) und das zweite Hebelelement (11) relativ zueinander bewegbar ausgebildet sind und miteinander gelenkig verbunden sind, und
wobei das zweite Hebelelement (11) mit dem Gestell (4) gelenkig verbunden ist und das erste Hebelelement (10) mit der Trichterwand (2) verbunden ist.

6. Zuführtrichter (1) nach Anspruch 5, wobei bei einer Bewegung aus der Selbsthemmungsstellung in die Faltstellung und/oder aus der Faltstellung in die Selbsthemmungsstellung das erste Hebelelement (10) und das zweite Hebelelement (11) einen Totpunkt überschreitend ausgebildet sind.

7. Zuführtrichter (1) nach Anspruch 5, wobei das erste Hebelelement (10) in seiner Längserstreckung (17) verstellbar ausgebildet ist und das erste Hebelelement (10) in der Selbsthemmungsstellung und in der Faltstellung eine größere Längserstreckung (17) als in dem Totpunkt aufweist.

8. Zuführtrichter (1) nach Anspruch 7, wobei das erste Hebelelement (10) ein Gegenkraftelement (24) aufweist, welches ein Überschreiten des Totpunktes bei einer Bewegung aus der Selbsthemmungsstellung in die Faltstellung und/oder aus der Faltstellung in die Selbsthemmungsstellung gegen eine von dem Gegenkraftelement (24) ausgeübte Gegenkraft zulassend ausgebildet ist.

9. Zuführtrichter (1) nach Anspruch 8, wobei das Gegenkraftelement (24) ein Verstellen der Längserstreckung (17) des ersten Hebelelements (10) gegen die von dem Gegenkraftelement (24) ausgeübte Gegenkraft zulassend ausgebildet ist.

10. Zuführtrichter (1) nach Anspruch 8 oder 9, wobei das Gegenkraftelement (24) ein elastisches Federelement (26) aufweist.

11. Zuführtrichter (1) nach einem der Ansprüche 5 bis 10, wobei das erste Hebelelement (10) und/oder das zweite Hebelelement (11) in der Selbsthemmungsstellung zumindest abschnittsweise an einer Auflage (14) anliegend abgestützt angeordnet ist/sind.

12. Zuführtrichter (1) nach Anspruch 11, wobei die Auflage (14) verstellbar befestigt ist.

13. Zuführtrichter (1) nach einem der Ansprüche 5 bis 12, wobei die Antriebsvorrichtung (6) als ein Hydraulikzylinder (8) ausgebildet ist, welcher an dem ersten Hebelelement (10) und/oder dem zweiten Hebelelement (11) angreift.

14. Zuführtrichter (1) nach einem der Ansprüche 5 bis 13, wobei in der Faltstellung das erste Hebelelement (10) und das zweite Hebelelement (11) zusammengefaltet und einen eingeschlossenen Winkel von weniger als 90° aufweisend angeordnet sind.

15. Zuführtrichter (1) nach einem der Ansprüche 5 bis 14, wobei bei einer Bewegung aus der Faltstellung in die Selbsthemmungsstellung und/oder aus der Selbsthemmungsstellung in die Faltstellung eine Drehrichtung (28) des ersten Hebelelements (10) entgegengesetzt zu einer Drehrichtung (29) des zweiten Hebelelements (11) ist.
